# EUROPEAN PATENT APPLICATION

(11) **EP 2 492 906 A2**
(43) Date of publication of application: **29.08.2012**
(21) Application number: 11182764.8
(22) Date of filing: 26.09.2011
(51) Int. Cl.: G09G 3/34, H04N 13/00

(54) **Image display apparatus**

(30) Priority: 25.02.2011 JP 2011040641
(71) Applicant: Kabushiki Kaisha Toshiba, Tokyo 105-8001 (JP)
(72) Inventor: Tsuchida, Masaki, Tokyo, 105-8001 (JP)
(74) Representative: Henkel, Breuer & Partner

(57) **Abstract**

An image display apparatus according to an embodiment includes: a light emission unit capable of illuminating light rays onto at least two divided areas; an image display capable of receiving light rays from the light emission unit and displaying an image signal which includes a plurality of elemental images having multiple parallax image components; a determination module configured to determine a representative pixel value from among the elemental images included in respective areas with respect to the respective areas; and a light intensity calculation module configured to calculate intensities of light rays illuminating respective areas on the basis of the determined representative pixel value.

## Description

### FIELD

Embodiments described herein relate generally to an image display apparatus.

### BACKGROUND

When displaying a two-dimensional image in image display apparatuses having a back light, it is typically conducted to control local dimming, i.e., to locally control an area by using a back light. For example, if local dimming is conducted when displaying a two-dimensional image, intensity of light emitted from the back light is calculated by referring to pixel values of all pixels in an image corresponding to an area where the back light is lit and the back light is controlled on the basis of the intensity of the light.

However, local dimming used when displaying a three-dimensional image having multiple parallax image components (a plurality of parallax image components) has not been studied sufficiently.

### BRIEF DESCRIPTION OF THE DRAWINGS

FIG. 1 is a block diagram showing an image display apparatus according to a first embodiment;
FIGS. 2 (a) to 2(d) are diagrams for explaining selection of representative pixel values;
FIG. 3 is a diagram for explaining selection of representative pixel values;
FIG. 4 is a block diagram showing an image display apparatus according to a second embodiment;
FIGS. 5 (a) to 5(c) are diagrams for explaining calculation of light intensity in the case of two-dimensional image display;
FIG. 6 is a block diagram showing an image display apparatus according to a third embodiment; and
FIG. 7 is a block diagram showing an image display apparatus according to a fourth embodiment.

### DETAILED DESCRIPTION

An image display apparatus according to an embodiment includes: a light emission unit capable of illuminating light rays onto at least two divided areas; an image display capable of receiving light rays from the light emission unit and displaying an image signal which includes a plurality of elemental images having multiple parallax image components; a determination module configured to determine a representative pixel value from among the elemental images included in respective areas with respect to the respective areas; and a light intensity calculation module configured to calculate intensities of light rays illuminating respective areas on the basis of the determined representative pixel value.

Hereafter, embodiments of an image display apparatus according to the present invention will be described more specifically with reference to the drawings.

### (First Embodiment)

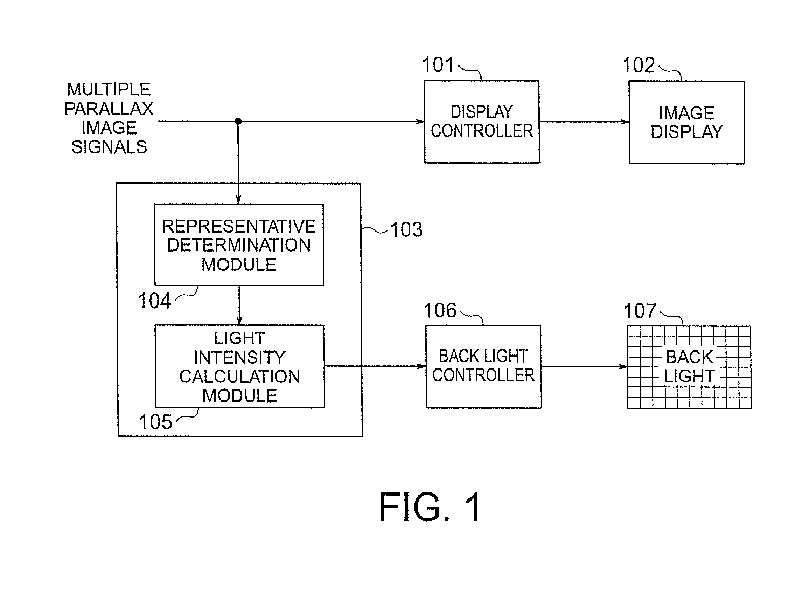

An image display apparatus according to a first embodiment is shown in FIG. 1. The display apparatus according to the first embodiment includes a display controller 101, an image display 102, a light intensity calculator 103, a back light controller 106, and a light emitting unit (back light) 107. The light intensity calculator 103 includes a representative determination module 104 and a light intensity calculation module 105.

Multiple parallax image signals having multiple parallax image components are input to the display controller 101. The image display 102 is controlled by the display controller 101 on the basis of the multiple parallax image signals. On the other hand, the multiple parallax image signals are also input to the light intensity calculator 103 which calculates the intensity of light with which an area obtained by dividing an image is irradiated. When the multiple parallax image signals are input to the light intensity calculator 103, the representative determination module 104 selects one representative value from among the multiple parallax image signals, and the selected pixel value is sent to the light intensity calculation module 105. Incidentally, selection of the representative pixel value will be described later. Using the selected pixel value, the light intensity calculation module 105 calculates the intensity of light with which the area is irradiated. The back light controller 106 controls the back light 107 on the basis of the calculated light intensity. It is a matter of course that display timing to the image display 102 is synchronized with timing of lighting of the light emitting unit in the back light 107 at this time.

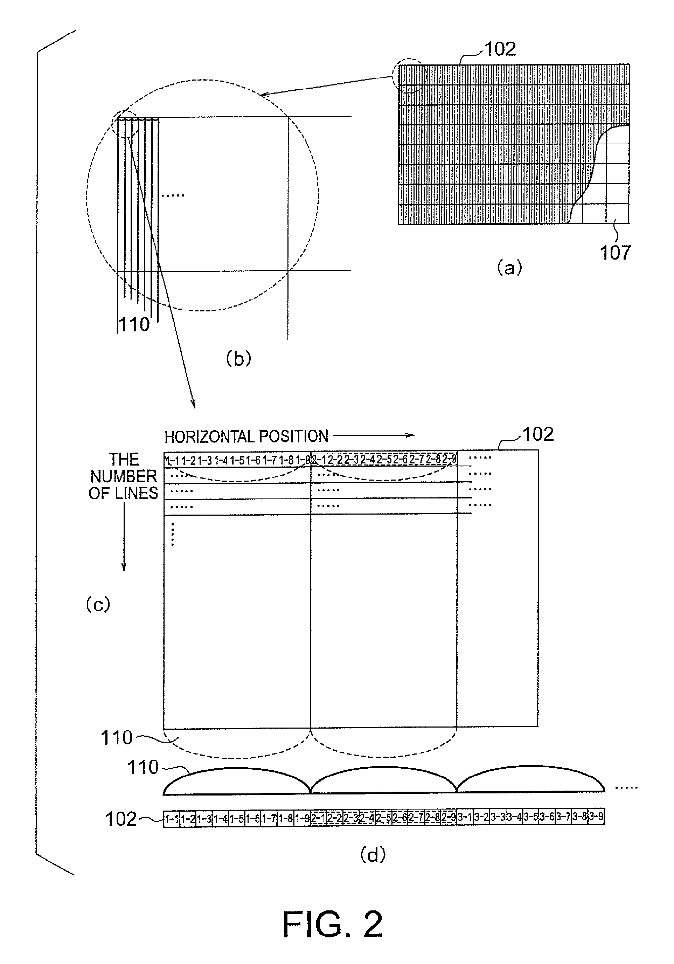

Selection of the representative pixel value will now be described with reference to FIGS. 2(a) to 3.

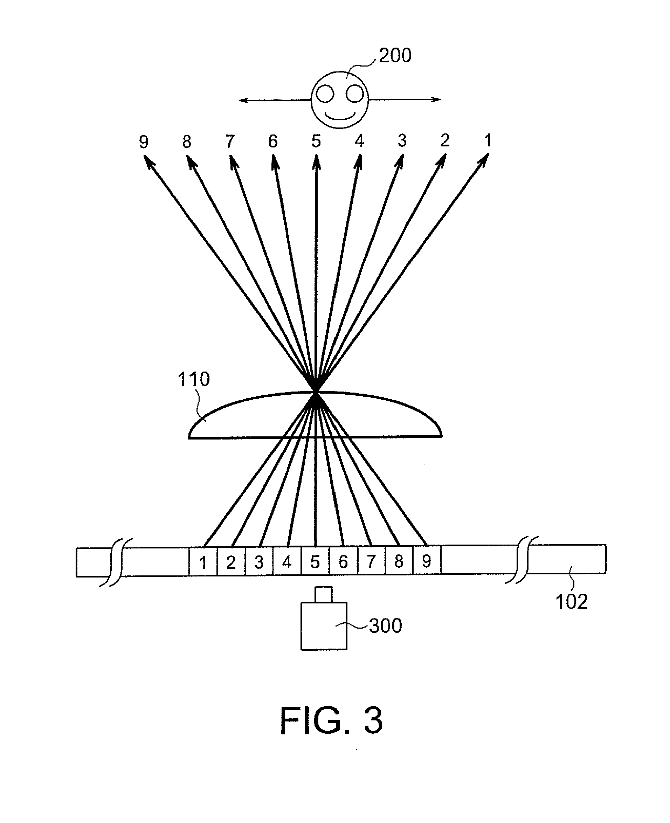

FIG. 3 is a diagram for explaining the present invention. FIG. 2(a) is a diagram showing the image display 102 and the back light 107 which is disposed on the back of the image display 102 and which can be controlled at every area with a certain desired number of divisions. The back light 107 is controlled on the basis of intensity of irradiating light calculated using image signals of the image display 102 corresponding to areas obtained by dividing into a desired number of portions. FIG. 2(b) shows an enlarged diagram of a certain irradiated area. In general, an optical plate 110 having a plurality of optical apertures is disposed in front of the image display in the autostereoscopic image display apparatus. The optical plate 110 controls light rays emitted from pixels arranged on a matrix which is provided on the display plane of the image display 102. The optical plate 110 controls light rays to cause a different image to be seen according to the angle even from the same position of the optical apertures. Specifically, when only lateral parallax (horizontal disparity) is given, a slit sheet or a lenticular sheet (cylindrical lens array) is used as the optical plate 110. When up-down parallax (vertical disparity) is also included, a pinhole array or a fly eye lens array is used as the optical plate 110. In other words, a slit in the slit sheet, a cylindrical lens in the cylindrical lens array, a pinhole in the pinhole array, or a fly eye lens in the fly eye lens array serves as an optical aperture. The optical plate 110 may be an optical plate of switching type (active type) in which the lens effect or optical apertures can be electrically activated or deactivated. Incidentally, for example, in some optical plates of switching type, a graded refractive index which acts as a lens is generated by disposing a liquid crystal layer between a pair of substrates, applying a voltage between electrodes periodically arranged on one substrate included in the pair of substrates and electrodes formed on the other substrate, thereby generating electric field distribution to change the orientation of the liquid crystal layer. In some other optical plates of switching type, polarized light which is input to a double refraction lens formed of liquid crystal or the like is changed over by a different liquid crystal cell.

In the present embodiment, the case where a lenticular sheet is used as the optical plate 110 will be described. In the image display apparatus according to the present embodiment, an image (elemental image) having a plurality of parallax image components is associated with each optical aperture, i.e., each cylindrical lens. For example, as shown in FIGS. 2(c) and 2(d), nine parallax image components 1-1 to 1-9 are associated with a first cylindrical lens and nine parallax image components 2-1 to 2-9 are associated with a second cylindrical lens. FIG. 2(c) shows the image display 102 and the optical plate 110 viewed by a viewer. FIG. 2(d) shows a sectional view obtained by cutting in the horizontal direction and viewed from the bottom.

As shown in FIG. 3, light rays representing the nine parallax image components, i.e., light rays representing the elemental images are spread through a corresponding optical aperture in the optical plate 110. Therefore, an image (parallax image component) viewed by a viewer 200 changes depending upon a viewing position. When an input image is an image for three-dimensional image display, for example, images corresponding to two parallaxes are necessary for the left and right eyes to view a stereoscopic image. When the viewer 200 is located in a position at which the fourth and fifth light rays (parallax image components) arrive, the fourth and fifth parallax image components respectively are seen by the left and right eyes, as shown in FIG. 3. As a result, the viewer 200 views a displayed image stereoscopically. If the image is different for every parallax even when the input image is an image for two-dimensional image display, the viewer views a different image according to the position and distance from the screen of the image display 102 to the viewer. In other words, when the input image has a plurality of parallax image components, an image viewed by the viewer 200 is a specific parallax image component. Therefore, it is more desirable to calculate the intensity of light illuminated from the back light according to the parallax image component viewed by the viewer 200. This can be conducted by detecting the position of the viewer 200 and the distance to the viewer by means of a camera 300 provided near the image display 102.

When the viewer 200 views the fourth and fifth parallax image components among the multiple parallax image components, a representative pixel value is selected from the two parallax image components. When the viewer views the first parallax image component even in the two-dimensional image display, the representative determination module 104 selects a representative pixel value from the parallax image component. The light intensity calculation module 105 calculates the intensity of light illuminating the area on the basis of the selected pixel value. The back light controller 106 controls the back light 107 on the basis of the calculated light intensity. As a result, an optimum luminance can be maintained and the picture quality can be prevented from being degraded. As a matter of course, a plurality of parallax image components may be the same image. Incidentally, in the case where each pixel is formed of, for example, red (R), blue (B) and green (G) sub-pixels, the representative pixel value means a pixel value (luminance value) of a sub-pixel.

For determining a representative pixel value from multiple parallax image components in the case of the three-dimensional image display, it is possible to calculate average values of pixel values of respective elemental images with respect to respective elemental images in a locally illuminated area and to select a maximum average value in the locally illuminated area from among those calculated average values as the representative pixel value so that the viewer can view an image from any position. The light intensity calculation module 105 calculates the light intensity on the basis of the selected representative pixel value. The back light controller 106 controls the back light 107 on the basis of the calculated light intensity. In this case, a bright image can be obtained, and an image having an insufficient luminance can also be suppressed. In this case, the representative pixel value is smaller as compared with the case where a pixel value of a pixel having a maximum luminance is selected as the representative, and consequently, the power dissipation can be made lower.

Furthermore, unlike the case where an average value of pixel values of all pixels in the illuminated area is found and the average value is regarded as the representative pixel value, it is not necessary to store the pixel values of all pixels and the memory capacity can be made smaller. As a result, the circuit scale of the light intensity calculator 103 can be made smaller.

For determining a representative pixel value from multiple parallax image components in the case of the three-dimensional image display, it is also possible to select pixel values of pixels having a maximum luminance values from among respective elemental images with respect to respective elemental images in a locally illuminated area and to select a maximum pixel value in the locally illuminated area from among those selected pixel values as the representative pixel value so that the viewer can view an image from any position. The light intensity calculation module 105 calculates the light intensity on the basis of the selected pixel values. The back light controller 106 controls the back light 107 on the basis of the calculated light intensity. In this case as well, a bright image can be obtained, and an image having an insufficient luminance can also be suppressed.

As described above, it is also possible to select pixel values of pixels having a maximum luminance as representative pixel values with respect to respective elemental images in a locally illuminated area, followed by calculating an average value for all elemental images in the locally illuminated area concerning these selected pixel values, and regard the average value as a representative pixel value. In this case, the representative pixel value is lower as compared with the case where a pixel value of a pixel having a maximum luminance is selected as the representative, and consequently the power dissipation can be made lower. Furthermore, unlike the case where an average value of pixel values of all pixels in the illuminated area is found and the average value is regarded as the representative pixel value, it is not necessary to store the pixel values of all pixels and the memory capacity can be made smaller. As a result, the circuit scale of the light intensity calculator 103 can be made smaller.

According to the first embodiment, the local dimming can be conducted effectively and picture quality degradation can be prevented when displaying a three-dimensional image, as described heretofore.

Incidentally, the image display apparatus according to the first embodiment is an autostereoscopic image display apparatus. The present embodiment can also be applied to an image display apparatus of a scheme using glasses (for example, polarization glass scheme) in which one image includes an image for the right eye and an image for the left eye and the viewer can view this image as a three-dimensional image using glasses if each of an image for the right eye and an image for the left eye is considered to be an elemental image in the first embodiment.

### (Second Embodiment)

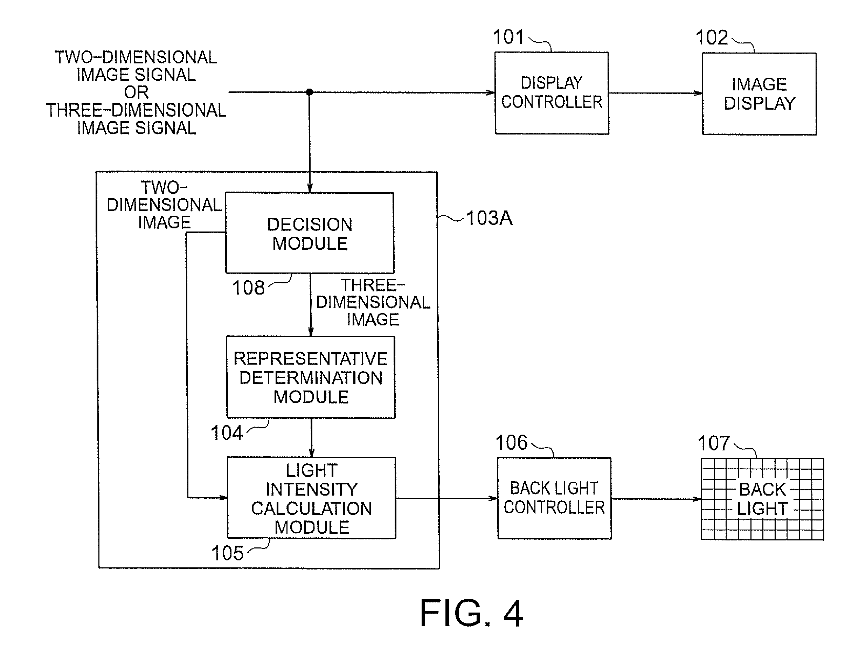

An image display apparatus according to a second embodiment is shown in FIG. 4. The image display apparatus according to the second embodiment has a configuration obtained by replacing the light intensity calculator 103 in the image display apparatus shown in FIG. 1 with a light intensity calculator 103A. The light intensity calculator 103A has a configuration obtained by additionally providing a decision module 108 in the light intensity calculator 103. The decision module 108 makes a decision whether an input image signal is a three-dimensional image signal or a two-dimensional image signal. If the input image signal is a three-dimensional image signal, the decision module 108 sends the three-dimensional image signal to the representative determination module 104. If the input image signal is a two-dimensional image signal, the decision module 108 sends the two-dimensional image signal to the light intensity calculation module 105. If the decision module 108 judges the input image signal to be a three-dimensional image signal, the representative determination module 104 selects a representative pixel value and the light intensity calculation module 105 calculates the intensity of light illuminating a local area using the selected pixel value in the same way as described in the first embodiment. The back light controller 106 controls the back light 107.

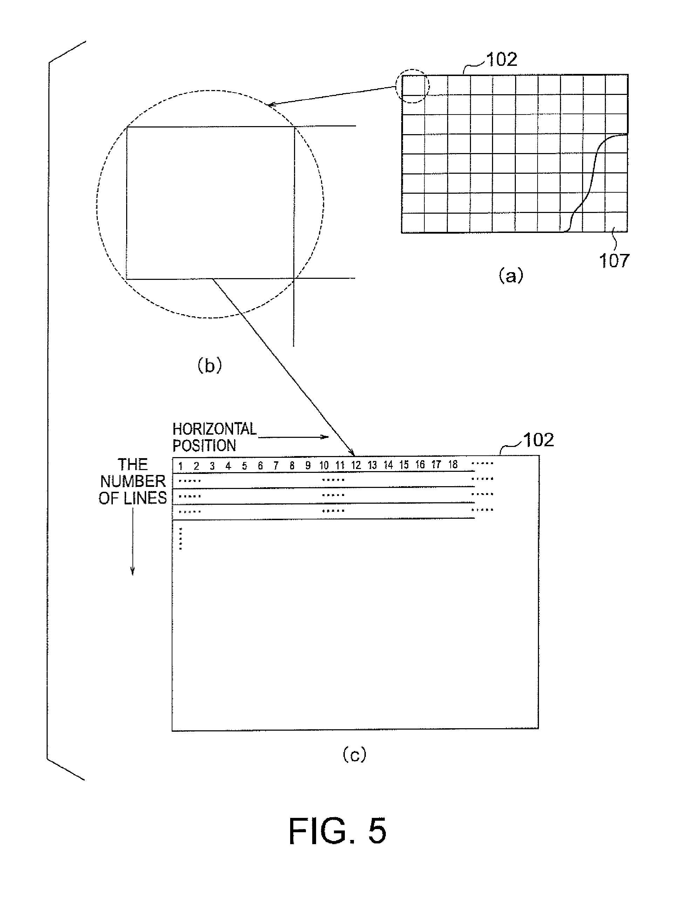

On the other hand, the case where the decision module 108 has judged the input image signal to be a two-dimensional image signal will now be described with reference to FIGS. 5(a) to 5(c). FIG. 5(a) is a diagram showing an image display 102 and the back light 107 which is disposed on the back of the image display 102 and which can be controlled at every area with a certain desired number of divisions. FIG. 5(b) is an enlarged diagram showing a certain area. As shown in FIG. 5(c), a two-dimensional image is an ordinary image which does not include a plurality of parallax images. When the two-dimensional image is displayed in the present embodiment, the light intensity calculation module 105 calculates intensity of light illuminating an area which is illuminated locally referring to pixel values of all pixels in the area. For example, the light intensity calculation module 105 may select a maximum value from among pixel values of all pixels in the area and calculate the light intensity for illuminating the area on the basis of the maximum value. In addition, the light intensity calculation module 105 may calculate an average value of pixel values of all pixels in the locally illuminated area and calculate the light intensity for illuminating the area on the basis of the calculated average value.

In other words, if the decision module 108 has judged the image signal to be a two-dimensional image signal, the representative determination module 104 does not operate, but the light intensity calculation module 105 calculates the light intensity for illuminating the area on the basis of the two-dimensional image signal.

Incidentally, the image display apparatus according to the second embodiment is an autostereoscopic image display apparatus. However, the second embodiment can also be applied to an image display apparatus of a scheme using glasses having a shutter function if each of an image for the right eye and an image for the left eye is considered to be a two-dimensional image in the second embodiment.

In the case where two-dimensional image display and three-dimensional image display are conducted by using the same image display panel as in the second embodiment, the image signal differs according to whether the image is the two-dimensional image or the three-dimensional image even if the pixel position is the same. In the case where changeover between the two-dimensional image display and the three-dimensional image display is conducted, therefore, the calculated light intensity differs. Therefore, it is possible to calculate an optimum light intensity to be illuminated and improve the picture quality by constructing a system which can be changed over as in the second embodiment.

In the second embodiment as well, the local dimming can be conducted effectively and picture quality degradation can be prevented when displaying a three-dimensional image, in the same way as the first embodiment.

### (Third Embodiment)

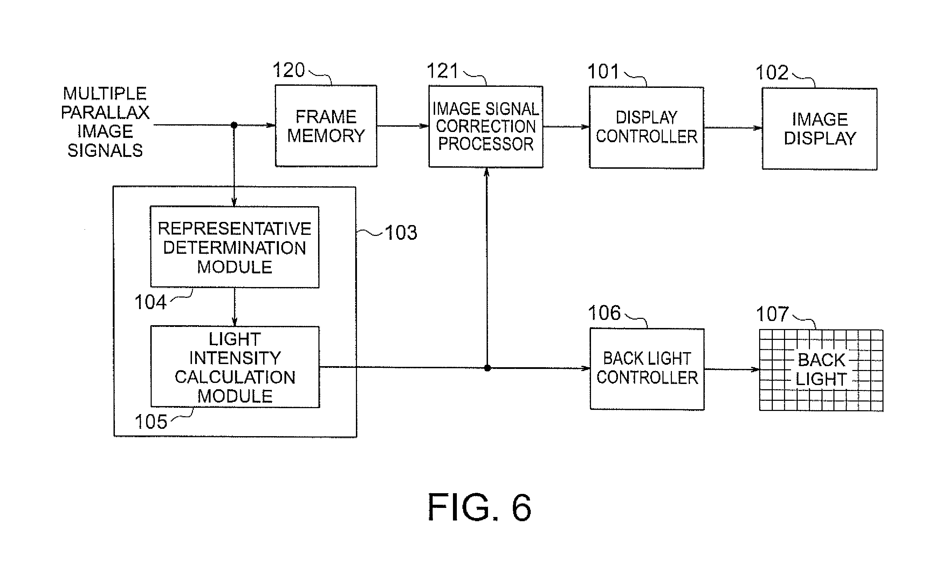

An image display apparatus according to a third embodiment is shown in FIG. 6. The image display apparatus according to the third embodiment has a configuration obtained by additionally providing a frame memory 120 and an image signal correction processor 121 in the image display apparatus according to the first embodiment shown in FIG. 1.

In the third embodiment, a multiple parallax image signal is input to the frame memory 120 and the light intensity calculator 103. The intensity of light illuminating each area calculated in the light intensity calculator 103 is input to the image signal correction processor 121. At this time, the image signal stored in the frame memory 120 is input to the image signal correction processor 121 concurrently. In the image signal correction processor 121, the image signal is corrected by taking the correlation between the intensity of light illuminating each area and the image signal into consideration. For example, if the intensity of light illuminating the area is calculated to be, for example, half of the maximum value when a pixel value of a pixel in the illuminated area is 50% in gradation display, the image signal correction processor 121 conducts correction to make the pixel value of the pixel in the area greater than 50%.

Furthermore, if the intensity of light illuminating the area is calculated to be, for example, the maximum value when a pixel value of a pixel in the illuminated area is 50% in gradation display, the image signal correction processor 121 conducts correction to make the pixel value of the pixel in the area less than 50%. It is possible to obtain an image having suitable brightness and suppress the picture quality degradation by conducting such correction.

Incidentally, control of the back light 107 is conducted in the same way as described in the first embodiment.

In the third embodiment as well, the local dimming can be conducted effectively and picture quality degradation can be prevented when displaying a three-dimensional image, in the same way as the first embodiment.

### (Fourth Embodiment)

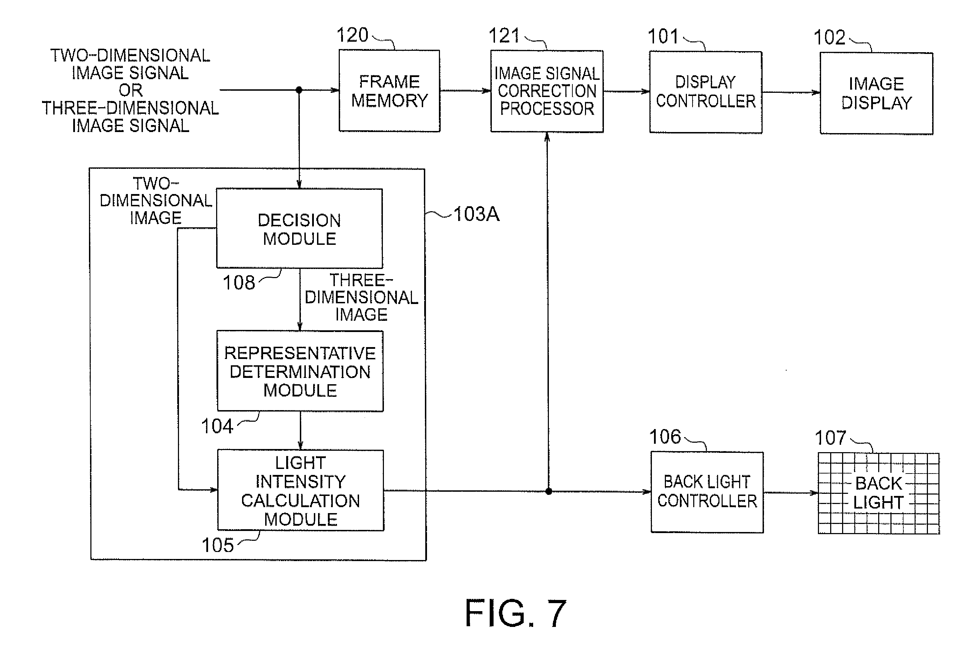

An image display apparatus according to a fourth embodiment is shown in FIG. 7. The image display apparatus according to the fourth embodiment has a configuration obtained by replacing the light intensity calculator 103 in the image display apparatus according to the third embodiment shown in FIG. 6 with the light intensity calculator 103A. As described in the second embodiment, the light intensity calculator 103A has a configuration obtained by additionally providing the decision module 108 in the light intensity calculator 103. The configuration and the action of the light intensity device 103A are the same as those in the second embodiment.

In the fourth embodiment as well, the local dimming can be conducted effectively and picture quality degradation can be prevented when displaying a three-dimensional image, in the same way as the first embodiment. Furthermore, the local dimming can be conducted effectively and picture quality degradation can be prevented when displaying a three-dimensional image, in the same way as the third embodiment. In addition, in the same way as the second embodiment, it is possible to calculate an optimum light intensity to be illuminated and the picture quality can be improved in each of the two-dimensional image display and the three-dimensional image display.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An image display apparatus comprising:
a light emission unit capable of illuminating light rays onto at least two divided areas;
an image display capable of receiving light rays from the light emission unit and displaying an image signal which includes a plurality of elemental images having multiple parallax image components;
a determination module configured to determine a representative pixel value from among the elemental images included in respective areas with respect to the respective areas; and
a light intensity calculation module configured to calculate intensities of light rays illuminating respective areas on the basis of the determined representative pixel value.

2. The image display apparatus according to claim 1, wherein the light intensity calculation module calculates intensities of light rays illuminating respective areas by using pixel values of pixels included in respective areas on the basis of the image signal when the image signal represents a two-dimensional image, and
the light intensity calculation module calculates intensities of light rays illuminating respective areas on the basis of the determined pixel value when the image signal represents a three-dimensional image.

3. The image display apparatus according to claim 1, further comprising a detector configured to detect a position of a viewer and a distance from the image display to the viewer,
wherein the determination module determines a representative pixel value on the basis of the position of the viewer and the distance to the viewer detected by the detector.

4. The image display apparatus according to claim 1, wherein the determination module calculates average values of pixel values in the elemental images included in respective areas and regards a maximum value among these calculated average values as a representative pixel value.

5. The image display apparatus according to claim 1, wherein the determination module selects maximum pixel values from among the elemental images included in respective areas, and regards an average value of the selected pixel values as a representative pixel value.

6. The image display apparatus according to claim 1, further comprising:
a frame memory configured to store the image signal for every frame; and
an image signal correction processor configured to correct the image signal on the basis of the light intensity calculated by the light intensity calculation module and the image signal stored in the frame memory,
wherein the image display displays an image signal corrected by the image signal correction processor.
